# EUROPÄISCHE PATENTANMELDUNG

(11) **EP 0 911 101 A1**
(43) Veröffentlichungstag der Anmeldung: **28.04.1999**
(21) Anmeldenummer: 97810787.8
(22) Anmeldetag: 22.10.1997
(51) Int. Cl.: B23C 5/10, B23B 31/40

(54) **Bearbeitungswerkzeug**

(71) Anmelder: FRAISA SA, 4512 Bellach (CH)
(72) Erfinder: Schmid, Konrad, 4514 Lommiswil (CH)
(74) Vertreter: Patentanwälte Breiter + Wiedmer AG

(57) **Zusammenfassung**

Bei einem modularen System (10) mit einem zum Einspannen in eine Spindel einer Bearbeitungsmaschine vorgesehenen Halterungsteil (12) und einem an diesem auswechselbar befestigten Bearbeitungswerkzeug (14) übergreift das Bearbeitungswerkzeug (14) mit einem hohlzylindrischen Schaftteil (18) einen Aufnahmedorn (20) am Halterungsteil (12) und ist über eine das Halterungsteil (12) und den Aufnahmedorn (20) durchsetzende Zugstange (22) mittels einer am Halterungsteil (12) gegengelagerten, eine Zugspannung erzeugenden Schraubeinrichtung (28, 30) am Halterungsteil (12) fixiert. Das dem Bearbeitungswerkzeug (14) zugewandte Ende der Zugstange (22) ist erweitert und führt unter Einwirkung der Zugspannung zu einer Aufweitung des Aufnahmedornes (20), wodurch die Umfangfläche (42) des Aufnahmedornes (20) und die Innenfläche (44) des Schaftteils (18) unter Ausbildung einer Reibschlussverbindung gegeneinander verspannt sind.

## Beschreibung

Die Erfindung betrifft ein Bearbeitungswerkzeug mit einem Halterungsteil zum Einspannen in eine Spindel einer Bearbeitungsmaschine, wobei das Bearbeitungswerkzeug am Halterungsteil auswechselbar befestigt ist.

Zur auswechselbaren Befestigung eines Bearbeitungswerkzeugs wie beispielsweise eines Fräsers, Bohrers oder Gewindeschneiders auf einem zum Einspannen in eine Spindel einer Bearbeitungsmaschine vorgesehenen Halterungsteil ist es bekannt, das Bearbeitungswerkzeug über ein an dessen Rückseite integral angeformtes Schraubengewinde in eine im Halterungsteil zentral angeordnete Gewindebohrung einzusetzen und mit einem Schraubenschlüssel festzuziehen. Bei einer anderen Befestigungsart wird das Bearbeitungswerkzeug über eine axiale Bohrung durch den Werkzeugkopf hindurch mit dem Halterungsteil verschraubt.

Ein wesentlicher Nachteil der beiden vorstehend erwähnten Verbindungen zwischen Bearbeitungswerkzeug und Halterungsteil liegt darin, dass häufig eine Unwucht auftritt und sich hieraus Probleme mit dem Rundlauf ergeben. Die Verschraubung durch den Werkzeugkopf ist zudem bei zentrumschneidenden Werkzeugen nicht möglich.

Der Erfindung liegt daher die Aufgabe zugrunde, die Befestigung eines Bearbeitungswerkeugs an einem Halterungsteil so auszugestalten, dass Unwuchtprobleme nicht auftreten. Zudem soll das Bearbeitungswerkzeug einfach und schnell auswechselbar sein. Ein weiteres Ziel ist die universelle Verwendung eines Halterungsteils für verschiedenartige Bearbeitungswerkzeuge, d.h. die Schaffung eines modularen Systems.

Zur erfindungsgemässen Lösung der Aufgabe führt, dass das Bearbeitungswerkzeug mit einem hohlzylindrischen Schaftteil einen Aufnahmedorn am Halterungsteil übergreift und über eine das Halterungsteil und den Aufnahmedorn durchsetzende Zugstange mittels einer am Halterungsteil gegengelagerten, eine Zugspannung erzeugenden Schraubeinrichtung am Halterungsteil fixiert ist, wobei das dem Bearbeitungswerkzeug zugewandte Ende der Zugstange erweitert ist und unter Einwirkung der Zugspannung zu einer Aufweitung des Aufnahmedornes führt, wodurch die Umfangfläche des Aufnahmedornes und die Innenfläche des Schaftteils unter Ausbildung einer Reibschlussverbindung gegeneinander verspannt sind.

Mit der erfindungsgemässen Anordnung ergibt sich im Befestigungsbereich des Bearbeitungswerkzeugs und des Halterungsteil ein symmetrischer Aufbau mit einer gegenüber vorbekannten Lösungen wesentlichen Masseverminderung. Auch bei der Anwendung hoher Drehzahlen läuft das Bearbeitungswerkzeug rund und wird durch die rückwärtige Befestigung über die Zugstange im Halterungsteil in festem Sitz gehalten.

Zweckmässigerweise ist die Innenfläche des Aufnahmedornes gegen sein freies Ende hin konisch erweitert und bildet eine Auflage für das erweiterte Ende der Zugstange, welches der konischen Erweiterung des Aufnahmedornes entsprechend ebenfalls konisch erweitert sein kann.

Bei einer bevorzugten Ausgestaltung des erweiterten Endes der Zugstange ist dieses als Ringwulst ausgebildet. Die sich daraus ergebende punktförmige Auflage auf der Konusfläche des Aufnahmedornes hat gegenüber der flächigen Auflage den Vorteil, dass dieser Bereich der Zugstange keinen hohen Präzisionsaufwand erfordert, wodurch die Gestehungskosten gesenkt werden können.

Für einen optimalen Sitz des Schaftteils auf dem Aufnahmedom kann es sich als vorteilhaft erweisen, die Innenfläche des Schaftteils als schwachen, gegen den Halterungsteil hin sich verengenden Konus auszubilden.

Obschon die Reibschlussverbindung zwischen der Umfangfläche des Aufnahmedomes und der lnnenfläche des Schaftteils für die meisten Bearbeitungswerkzeuge und -arten ausreichend sein dürfte, kann eine zusätzliche Verdrehsicherung in der Form wenigstens eines zwischen dem Halterungsteil und dem Schaftteil angeordneten Verbindungselementes vorgesehen sein. Bei einer bevorzugten Verdrehsicherung greifen in Bohrungen stirnseitig im Halterungsteil eingesetzte Stifte in stirnseitig im Schaftteil angeordnete Ausnehmungen oder Nuten ein.

Die Aufspannung des Bearbeitungswerkzeugs auf dem Halterungsteil erfolgt im einfachsten Fall über eine Mutter, die einem einends an der Zugstange angeordneten Gewinde aufgesetzt ist und als Gegenanschlag dient. Zur Sicherung der Mutter gegen unbeabsichtigtes Lösen wird zweckmässigerweise eine in einem Gewinde im Halterungsteil geführte Konterschraube eingesetzt.

Bei einer besonders vorteilhatten Anordnung der Schraubeinrichtung weisen sowohl die Mutter als auch die Konterschraube ein lnnenvielkant auf, wobei das lnnenvielkant der Mutter ohne Behindetung durch die Konterschraube hindurch bedienbar ist. Als lnnenvielkant ist ein übliches Innensechskant bevorzugt, jedoch sind auch andere Ausführungsformen wie z.B. ein Innenvierkant oder -achtkant denkbar.

Bei dieser Anordnung kann das Bearbeitungswerkzeug auf einfache Weise ausgewechselt werden, da sich durch Drehung der Mutter die Zugstange gegen das Bearbeitungswerkzeug hin bewegt, wodurch sich die Reibschlussverbindung löst. Mit der erfindungsgemässen Befestigung des Bearbeitungswerkzeugs am Halterungsteil ergibt sich ein modulares System, das insbesondere zur schnellen und einfachen Aufspannung von Fräsern, Bohrern und Gewindeschneidern geeignet ist.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: einen Längsschnitt durch einen Halterungsteil mit aufgesetztem Bearbeitungswerkzeug;
- Fig. 2: einen Längsschnitt durch den Halterungsteil der Anordnung von Fig. 1;
- Fig. 3: einen Längsschnitt durch die Zugstange der Anordnung von Fig. 1.

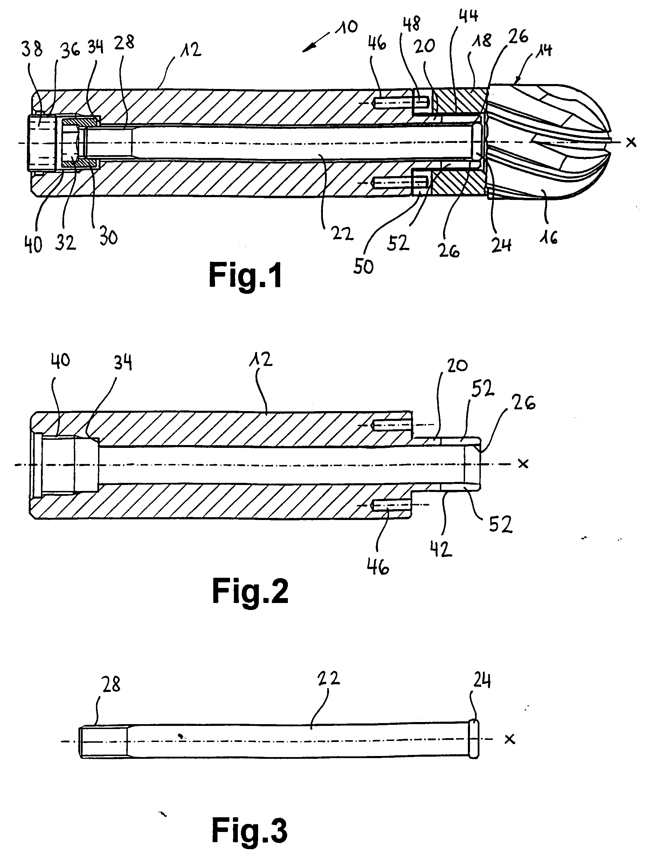

Ein in Fig. 1 dargestelltes modulares Fräser-System 10 zum Einspannen in eine aus Gründen der besseren Uebersicht in der Zeichnung nicht wiedergegebene Spindel einer Fräsmaschine weist einen im wesentlichen rohrförmigen Halterungsteil 12 auf, welcher eine Werkzeugachse x definiert. Dem Halterungsteil 12 ist ein Fräser oder allgemein ein Bearbeitungswerkzeug 14 in der Werkzeugachse x aufgesetzt.

Das Bearbeitungswerkzeug 14 weist einen vom eigentlichen Bearbeitungskopf 16 abragenden hohlzylindrischen Schaftteil 18 auf, der einen vom Halterungsteil 12 zentrisch abragenden Aufnahmedorn 20 übergreift.

Eine Zugstange 22 durchsetzt das Halterungsteil 12 und den Aufnahmedom 20. Die Zugstange 22 ist an ihrem dem Bearbeitungswerkzeug 14 benachbarten Ende mit einem Ringwulst 24 versehen, welcher der Innenfläche des Aufnahmedornes 20 im Bereich seines freien Endes gleitend anliegt. Der Aufnahmedorn 20 ist in diesem Auflagebereich des Ringwulstes gegen sein offenes Ende hin mit einer konischen Erweiterung 26 versehen. Zum besseren Verständnis des Aufbaus des modularen Systems 10 sind der Halterungsteil 12 und die Zugstange in den Fig. 2 und 3 einzeln dargestellt.

An ihrem dem Ringwulst 24 entgegengesetzten Ende ist die Zugstange 22 mit einem Gewinde 28 versehen. Eine Mutter 30 mit einem Innensechskant 32 ist auf das gewindeseitige Ende der Zugstange 22 aufgeschraubt und liegt beim Aufbringen einer Zugspannung einer Anschlagfläche 34 am Halterungsteil 12 an. Die durch das Anziehen der Mutter 30 erzeugte Zugspannung zieht den Ringwulst 24 entlang der konischen Erweiterung 26 in den Aufnahmedorn 20 hinein, wodurch dieser gedehnt wird uns sich mit seiner Umfangfläche 42 der Innenfläche 44 des Schaftteils 18 unter Bildung einer Reibschlussverbindung flächig anlegt. Die Innenfläche 44 ist zur Optimierung des Sitzes zwischen Bearbeitungswerkzeug 14 und Halterungsteil 12 gegen den Kopf 16 hin schwach konisch erweitert.

Die zur Aufweitung des Aufnahmedornes 20 erforderliche Dehnung kann durch eine entsprechend geringe Wandstärke des Aufnahmedornes bereitgestellt werden. Eine andere einfache Möglichkeit ergibt sich durch das Anbringen von beispielsweise vier Längsschlitzen 52.

Zur Sicherung der Mutter 30 gegen unbeabsichtigtes Lösen ist eine Konterschraube 36 vorgesehen, die in ein Innengewinde 40 im Halterungsteil 12 eingreift. Die Konterschraube 36 ist mit einem durchgehenden Innensechskant 38 versehen, welches einen grösseren Durchmesser aufweist als das Innensechskant 32 der Mutter 30, sodass diese ohne Behinderung durch die Konterschraube 36 hindurch bedient werden kann. Mit dieser Anordnung lässt sich das Bearbeitungswerkzeug 14 mühelos vom Halterungsteil 12 abnehmen, da durch Drehen der durch die Konterschraube 36 abgestützten Mutter 30 eine Bewegung der Zugstange 22 in Richtung des Bearbeitungswerkzeuges 14 erfolgt, wodurch sich die Reibschlussverbindung zwischen der Innenfläche 44 des Schaftteils 18 und der Omfangfläche 42 des Aufnahmedornes 20 löst.

Als weitere Verdrehsicherung des Bearbeitungswerkzeuges 14 auf dem Halterungsteil 12 ist zwischen den beiden Teilen ein diese überbrückendes Verbindungsteil angeordnet. Hierzu sind im Halterungsteil 12 von dessen Stirnseite ausgehende Bohrungen 46 zur Aufnahme von die Stirnseite des Halterungsteils 12 um wenige Millimeter überragenden Stiften 48 vorgesehen. Zur Aufnahme der Stifte 48 im Bearbeitungswerkzeug 14 sind in der Stirnseite des Schaftteils 18 entsprechende Ausnehmungen bzw. Nuten 50 eingearbeitet. An Stelle der Nuten 50 können auch Bohrungen vorgesehen sein.

## Patentansprüche

1. Bearbeitungswerkzeug mit einem Halterungsteil zum Einspannen in eine Spindel einer Bearbeitungsmaschine, wobei das Bearbeitungswerkzeug (14) am Halterungsteil (12) auswechselbar befestigt ist,
dadurch gekennzeichnet, dass
das Bearbeitungswerkzeug (14) mit einem hohlzylindrischen Schaftteil (18) einen Aufnahmedorn (20) am Halterungsteil (12) übergreift und über eine das Halterungsteil (12) und den Aufnahmedorn (20) durchsetzende Zugstange (22) mittels einer am Halterungsteil (12) gegengelagerten, eine Zugspannung erzeugenden Schraubeinrichtung (28, 30) am Halterungsteil (12) fixiert ist, wobei das dem Bearbeitungswerkzeug (14) zugewandte Ende der Zugstange (22) erweitert ist und unter Einwirkung der Zugspannung zu einer Aufweitung des Aufnahmedornes (20) führt, wodurch die Umfangfläche (42) des Aufnahmedornes (20) und die Innenfläche (44) des Schaftteils (18) unter Ausbildung einer Reibschlussverbindung gegeneinander verspannt sind.

2. Bearbeitungswerkzeug nach Anspruch 1, dadurch gekennzeichnet, dass die Innenfläche des Aufnahmedornes (20) gegen sein freies Ende hin konisch erweitert ist und eine Auflage für das erweiterte Ende der Zugstange (22) bildet.

3. Bearbeitungswerkzeug nach Anspruch 2, dadurch gekennzeichnet, dass das erweiterte Ende der Zugstange (22) der konischen Erweiterung (26) des Aufnahmedornes (20) entsprechend konisch erweitert oder als Ringwulst (24) ausgebildet ist.

4. Bearbeitungswerkzeug nach einem der Ansprüche 1 bis 3, dadurch gekennzeichnet, dass der Aufnahmedorn (20) zur Unterstützung seiner Aufweitung wenigstens einen Längsschlitz (52) aufweist.

5. Bearbeitungswerkzeug nach einem der Ansprüche 1 bis 4, dadurch gekennzeichnet, dass die Innenfläche (44) des Schaftteils (18) gegen den Halterungsteil (12) hin konisch verengt ist.

6. Bearbeitungswerkzeug nach einem der Ansprüche 1 bis 5, dadurch gekennzeichnet, dass zwischen dem Halterungsteil (12) und dem Schaftteil (18) wenigstens ein Verbindungselement als Verdrehsicherung angeordnet ist, wobei vorzugsweise in Bohrungen (46) stirnseitig im Halterungsteil (12) eingesetzte Stifte (48) in stirnseitigem Schaftteil (18) angeordnete Ausnehmungen oder Nuten (50) eingreifen.

7. Bearbeitungswerkzeug nach einem der Ansprüche 1 bis 6, dadurch gekennzeichnet, dass die Zugstange (22) einends mit einem Gewinde (28) und einer diesem zur Erzeugung der Zugspannung aufgesetzten Mutter (30) als Gegenanschlag versehen ist.

8. Bearbeitungswerkzeug nach Anspruch 7, dadurch gekennzeichnet, dass die Mutter (30) mit einer in einem Gewinde (40) im Halterungsteil (12) geführten Konterschraube (36) gesichert ist.

9. Bearbeitungswerkzeug nach Anspruch 8, dadurch gekennzeichnet, dass die Mutter (30) und die Konterschraube (36) ein lnnenvielkant (32, 38) aufweisen, wobei das lnnenvielkant (32) der Mutter (30) ohne Behinderung durch die Konterschraube hindurch bedienbar ist.

10. Verwendung des Bearbeitungswerkzeugs (14) und des Halterungsteils (12) nach einem der Ansprüche 1 bis 9 als modulares Fräser-, Bohrer- und Gewindeschneider-System.
